# EUROPÄISCHE PATENTSCHRIFT

(11) **EP 1 535 781 B1**
(45) Veröffentlichungstag und Bekanntmachung des Hinweises auf die Patenterteilung: **02.01.2008**
(21) Anmeldenummer: 04027886.3
(22) Anmeldetag: 24.11.2004
(51) Int. Cl.: B60J 7/20

(54) **Hutablage eines Cabriolets**
Rear shelf for cabriolet
Plage arrière pour cabriolet

(30) Priorität: 27.11.2003 DE 10356003
(43) Veröffentlichungstag der Anmeldung: 01.06.2005
(73) Patentinhaber: Webasto AG, 82131 Stockdorf (DE)
(72) Erfinder: Reinsch, Burkhard, 87600 Kaufbeuren (DE)

(56) Entgegenhaltungen:
- EP-A- 0 819 559
- EP-A- 0 860 313
- EP-A- 0 949 105
- DE-A1- 19 750 418

## Beschreibung

Die Erfindung betrifft eine Hutablage eines Cabriolets mit einem umwandelbaren Dach, das in einen rückwärtigen Ablageraum des Cabriolets absenkbar ist, sowie ein Cabriolet mit einer derartigen Hutablage.

Aus der EP 0 860 313 B1 ist eine Hutablage eines Cabriolets bekannt geworden, die an einer Trennwand zwischen den Fahrzeugsitzen und dem Kofferraum schwenkbar gelagert ist und aus ihrer horizontalen Funktionsstellung innerhalb bzw. unterhalb eines hinteren Dachteils des geschlossenen Cabriodaches in eine vertikale Zwischenstellung an die Rückseite der Trennwand schwenkbar ist, um eine Durchtrittsöffnung zum Ablegen des Daches in den Ablageraum im Kofferraum freizugeben. Die Schwenkbewegung der Hutablage wird von der Schwenkbewegung der einen Verdeckkastendeckel bildenden und zum Ablegen des Daches an ihrem Vorderrand hochschwenkbaren Kofferraumklappe gesteuert. Wenn das Dach in den Ablageraum abgelegt ist, verschwenkt die sich schließende Kofferraumklappe wieder zurück in ihre Funktionsstellung zum Abdecken der Durchtrittsöffnung.

Aus der EP 0 949 105 A1 ist eine Hutablage eines Cabriolets bekannt geworden, die am Vorderrand einer als Verdeckkastendeckel dienenden Kofferraumklappe schwenkbar gelagert ist und aus ihrer horizontalen Funktionsstellung innerhalb bzw. unterhalb eines hinteren Dachteils des geschlossenen Cabriodaches in eine Zwischenstellung nach hinten unter die Kofferraumklappe geschwenkt wird, wenn das Dach in den Ablageraum abgelegt wird. Bei abgelegtem Dach ist sie wieder nach vorne geschwenkt und bildet als vordere Verlängerung der Kofferraumklappe eine Abdeckung der Durchtrittsöffnung für das abzulegende Dach.

Wenn Gegenstände auf einer derartigen Hutablage angeordnet sind, besteht die Gefahr, daß sie in den Seitenbereichen zwischen der Hutablage und dem hinteren Dachteil oder durch Lüftungsschlitze in den Kofferraum oder Dachablageraum oder in den Bereich der Lagermechanik des Daches fallen können und dort Schäden beim Ablegen des Daches verursachen können.

Der Erfindung liegt die Aufgabe zugrunde, eine eingangs genannte Hutablage zu schaffen, die bei in den Dachablageraum abgesenktem Dach nur wenig Ablageraum benötigt und die bei geschlossenem Dach an einem hinteren Dachteil funktional integriert ist. Das Dokument DE 197 50 418 beschreibt eine gattungsgemäße Anordnung.

Die Aufgabe wird bei der oben genannten Hutablage erfindungsgemäß dadurch gelöst, daß die Hutablage in Zuordnung zu einem hinteren Dachteil des absenkbaren Daches bewegbar gelagert ist und mittels einer Hutablage-Verstelleinrichtung zwischen einer Funktionsstellung bei geschlossenem Dach und einer Ablagestellung, in der sie relativ zum hinteren Dachteil des in den Ablageraum abgesenkten Daches verlagert ist, verstellbar ist, und daß eine Abdeckeinrichtung für den Übergang zwischen der Hutablage und dem hinteren Dachteil vorgesehen ist.

Da die Hutablage beim Absenken des Daches relativ zum hinteren Dachteil und insbesondere näher an das hintere Dachteil, z. B. gegen eine Heckscheibe des hinteren Dachteils oder einen Bereich unterhalb der Heckscheibe, bewegt wird, wird der in vertikaler Richtung für die übereinander abgelegten Dachteile benötigte Ablageraum reduziert. Durch die raumsparende Positionierung der Hutablage zwischen zwei abgelegten Dachteilen benötigt die Hutablage keinen zusätzlichen Ablageraum außerhalb der kompakt und insbesondere gleichbombiert angeordneten Dachteile.

Die erfindungsgemäße Abdeckeinrichtung, die den Zwischenraum zwischen der Hutanlage und dem hinteren Dachteil oder den Bereich, in dem die Hutablage am hinteren Dachteil anliegt, überdeckt oder abdichtet, verhindert das Eindringen von Fremdgegenständen von der Hutablage in den Bereich der Dachmechanik. Weiterhin verbessert sie die Geräuschisolierung oder Geräuschdämmung vom Dachablageraum bzw. Kofferraum zum Fahrzeuginnenraum hin. Unter hinterem Dachteil wird dabei das festschalige, eine Heckscheibe enthaltende Heckelement des mehrteiligen Hardtop-Klappdaches, ein C-Säulenbereich dieses Heckelements, eine eigenständige bewegbar gelagerte C-Säule eines Klappdaches oder auch ein hinterer Abschnitt eines Faltverdecks oder Softtops verstanden.

Vorteilhafte Ausgestaltungen der Erfindung sind in den Unteransprüchen angegeben.

Zweckmäßigerweise ist zumindest ein Teil der Abdeckeinrichtung von einer Innenverkleidung gebildet, die mit der Hutablage verbunden ist und bei geschlossenem Dach am hinteren Dachteil innenseitig angeordnet ist. Die Innenverkleidung ist ein bewegbares Bauteil zum Abdecken der Innenseite des hinteren Dachteils oder einer C-Säule eines ablegbaren Daches und sie kann als starre Einheit bewegt oder verschwenkt werden oder sie besteht aus elastischem oder flexiblem Material wie z. B. einem Stoff oder einer Folie oder dergleichen. Die Innenverkleidung kann auch eine zur Fahrzeugtür gerichtete Vorderseite des Daches bzw. der C-Säule abdecken.

Neben der Ausbildung als flexibles Stoffteil oder dergleichen kann die Innenverkleidung ein an der Hutablage schwenkbar angebrachtes festes Verkleidungsteil sein. Das Verkleidungsteil besteht z. B. aus dem Material eines festen Formhimmels wie z. B. einem Kunststoff oder einem Preßstoff und kann z. B. mittels eines Schwenkgelenks oder Scharniers an der Hutablage befestigt sein. Es kann jedoch auch an der Hutablage fest angebracht sein und einen biegbaren Bereich oder eine Biegelinie aufweisen, um die es verschwenkt oder geklappt werden kann. Das flexible Stoffteil oder dergleichen kann an der Hutablage z. B. angeklebt oder vernäht sein oder es ist als eine einstückige Verlängerung einer Bespannung der Hutablage gebildet.

Die Innenverkleidung kann mit dem hinteren Dachteil fest verbunden sein, z. B. über einen randseitigen Saum oder eine Leiste. Der Stoff paßt sich dann aufgrund seiner Elastizität an die jeweilige Stellung bei geschlossenem wie auch bei geöffnetem Dach an. Alternativ oder ergänzend kann die Innenverkleidung mit dem hinteren Dachteil mittels einer Spanneinrichtung verbunden sein. Die Spanneinrichtung, z. B. zumindest eine Feder oder ein elastisches Zugband, verbindet die Innenverkleidung mit dem hinteren Dachteil bzw. der C-Säule.

Vorzugsweise ist eine Dichtung, insbesondere eine Dichtlippe, zwischen der Hutablage und dem hinteren Dachteil und insbesondere am Hinterrand der Hutablage abdichtend angeordnet. Damit kann ein rückseitiger Spalt zwischen der Hutablage und dem hinteren Dachteil abgedeckt und abgedichtet werden. Die Dichtung oder Dichtlippe folgt der Bewegung der Hutablage relativ zum hinteren Dachteil beim Ablegen des Daches und hält den Spalt abgedeckt. Die Dichtung oder Dichtlippe ist an der Hutablage und/oder an dem hinteren Dachteil angebracht.

Statt der Dichtung kann jedoch auch eine Abdeckung in der Art einer flexiblen Innenverkleidung mit einem Stoff oder einer Folie verwendet werden, die an der Hutablage und dem hinteren Dachteil befestigt ist und.

Vorzugsweise ist die Hutablage um eine im Bereich ihres Hinterrandes angeordnete Schwenkachse schwenkbar gelagert und insbesondere ist die Hutablage im Bereich ihres Hinterrandes mit dem hinteren Dachteil schwenkbar verbunden. Dadurch ergibt sich eine besonders einfach gestaltete Lagerung der Hutablage, die mit dem hinteren Dachteil bewegt wird, so daß lediglich die Schwenkbewegung der Hutablage noch erzeugt werden muß. Jedoch kann die Hutablage auch mittels einer eigenen Lagereinrichtung zwischen ihren beiden Stellungen verstellt werden.

Demzufolge kann die Hutablage beim Ablegen des Daches in das hintere Dachteil eingeschwenkt oder durch eine Verschiebebewegung daran angenähert werden.

Besonders bevorzugt ist, daß die Hutablage zwei sich gegenüberliegende äußere Seitenbereiche aufweist, die gegenüber dem Mittelteil der Hutablage verschwenkbar sind. Dann kann die Hutablage an die üblicherweise gekrümmte Form des hinteren Dachteils angepaßt werden, wenn sie gegen die Innenseite des hinteren Dachteils verlagert wird. Die Seitenbereiche und der Mittelteil der Hutablage können aus demselben Material oder aus unterschiedlichen Materialien gebildet sein. In einer einfachen Gestaltung enthält die Hutablage eine Schwächungszone oder Schwächungslinie, um die sich jeder Seitenbereich in seiner Gesamtheit verschwenken kann. Der Seitenbereich kann jedoch auch derart flexibel gebildet sein, daß er sich zur Anpassung an die Krümmung des hinteren Dachteils selbst krümmt oder biegt. Ganz allgemein ist die Hutablage aus ihrer im wesentlichen ebenen, flächigen Gestalt, die sie in ihrer Funktionsstellung einnimmt, in eine gekrümmte und an das hintere Dachteil oder an das hintere und an ein darunter angeordnetes weiteres Dachteil angepaßte Form veränderbar.

Zweckmäßigerweise ist die Hutablage in der Schließstellung des Daches in ihre Funktionsstellung nach unten vorgespannt, so daß sie im Fahrbetrieb keine Klappergeräusche erzeugen kann. Die Vorspannung kann durch eine Federkrafteinrichtung oder dergleichen erzeugt werden.

Die Bewegung bzw. das Einschwenken der Hutablage gegen das hintere Dachteil erfolgt vorzugsweise mittels eines Steuerhebels, der mit der Unterseite der Hutablage in Kontakt ist und diese beim Ablegen des Daches gegen das hintere Dachteil verlagert bzw. schwenkt. Der Steuerhebel ist beispielsweise an der Lagermechanik des Daches bzw. des hinteren Dachteils angebracht und an der Unterseite der Hutablage an einer länglichen Eingriffsfläche ständig oder nur beim Ablegen des Daches in Steuereingriff. Die längliche Eingriffsfläche kann als Gleit- oder Abrollbock gebildet sein, der unterseitig am Mittelteil der Hutablage einstückig mit diesem gebildet oder als eigenes Bauteil daran angebracht ist.

Zweckmäßigerweise ist am hinteren Dachteil seitlich jeweils ein Niederhalter angeordnet, der in der Ablagestellung des Daches den Seitenbereich der verschwenkten Hutablage gegenüber ihrem Mittelteil verschwenkt hält.

Mit dieser Hutablage kann das hintere Dachteil in Ablagestellung mit seiner Außenseite nach oben weisend abgelegt sein und zumindest ein zweites Dachteil kann gleichbombiert zu dem hinteren Dachteil unterhalb der Hutablage platzsparend angeordnet sein.

Die Aufgabe wird auch durch ein Cabriolet mit den Merkmalen des Anspruchs 21 gelöst.

Nachfolgend wird die Hutablage anhand eines Ausführungsbeispiels unter Bezugnahme auf die Zeichnung näher erläutert. Es zeigt:

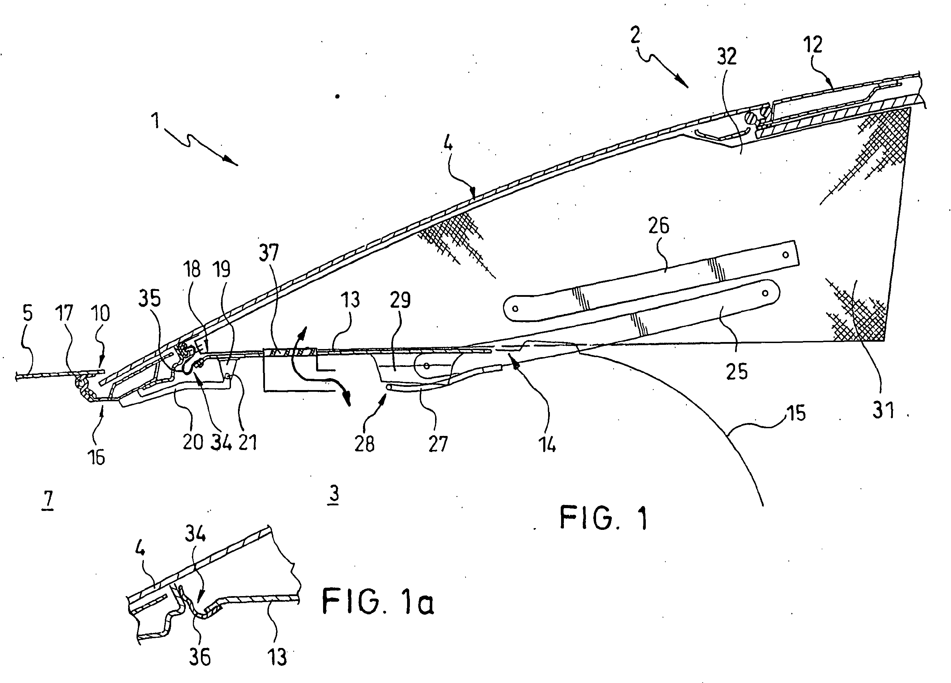

- Fig. 1: in einer Längsschnittansicht in schematischer Teildarstellung einen Ausschnitt eines Heckbereichs eines Cabriolets mit einer erfindungsgemäßen Hutablage bei geschlossenem Dach;
- Fig. 1 a: in einer Längsschnittansicht einen Ausschnitt der Fig. 1, der den Hinterrand der Hutablage mit einer Dichtlippe zeigt;
- Fig. 2: in einer Längsschnittansicht gemäß Fig. 1 die Hutablage in einer Zwischenstellung beim Öffnen und Ablegen des Daches;
- Fig. 3: in einer Längsschnittansicht gemäß Fig. 1 die Hutablage in ihrer Endstellung bei geöffnetem, abgelegtem Dach;
- Fig. 4: in einer perspektivischen Unteransicht die linke Hälfte eines hinteren Dachteils des ablegbaren Cabriolet-Daches mit der Hutablage bei geschlossenem Dach;
- Fig. 5: in einer Vorderansicht die Hutablage bei abgelegtem Dach;
- Fig. 6: in einer perspektivischen Unteransicht die linke Hälfte des hinteren Dachteils mit der Hutablage bei abgelegtem Dach;
- Fig. 7: in einer weiteren perspektivischen Unteransicht die linke Hälfte des hinteren Dachteils mit der Hutablage bei abgelegtem Dach, wobei ein weiteres Dachteil unterhalb der Hutablage dargestellt ist;
- Fig. 8: in einer perspektivischen Draufsicht in vergrößerter Ausschnittdarstellung einen Niederhalter für einen Seitenbereich der Hutablage bei abgelegtem Dach; und
- Fig. 9: in einer perspektivischen Draufsicht in schematischer Darstellung ein Cabriolet mit der Hutablage und Seitenverkleidungsteilen des hinteren Dachteils.

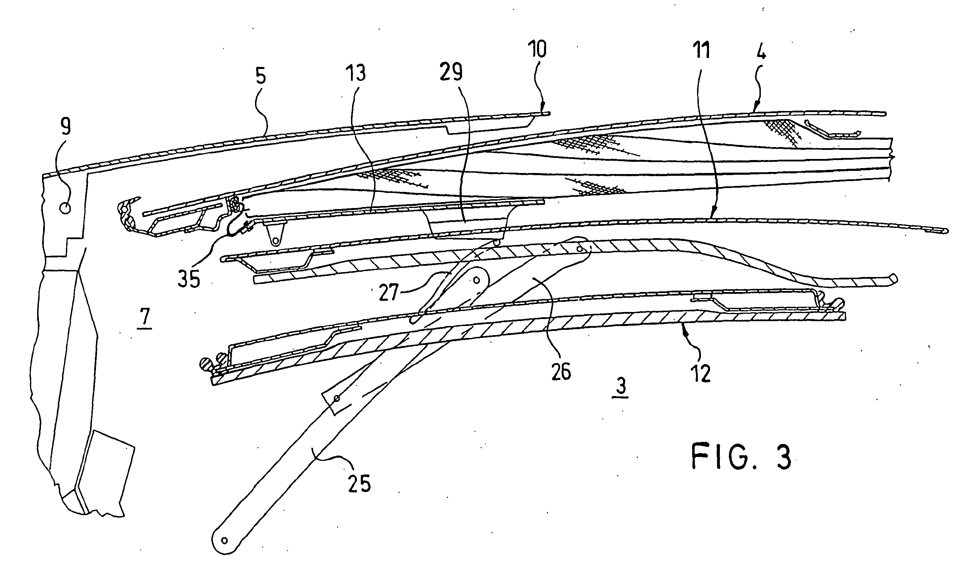

Ein Cabriolet 1 enthält ein bewegbares und zum Öffnen absenkbares Dach 2, das zwischen einer Schließstellung (Fig. 1) über dem Fahrzeuginnenraum und einer Offenstellung (Fig. 3), in der es in einem heckseitigen Ablageraum oder Verdeckkasten 3 abgelegt ist, verstellbar ist. Das Dach 2 ist gemäß dem dargestellten Ausführungsbeispiel ein bewegbares Hardtop mit mehreren in Schließstellung hintereinander angeordneten starren Dachteilen, wie es z. B. allgemein in der DE 199 43 860 A1 offenbart ist und insbesondere in der DE 101 50 218 A1 beschrieben ist, kann aber alternativ auch ein flexibles Softtop mit einem faltbaren Verdeckgestänge sein. An ein in Schließstellung des Daches 2 hinteres Dachteil 4 oder C-Segment (Fig. 1), das eine Heckscheibe enthält, schließt sich eine Kofferraumklappe 5 an, die an der Karosserie mittels einer Schwenklagereinrichtung (nicht dargestellt) um eine vordere Schwenkachse schwenkbar gelagert ist und zum Freigeben einer Beladeöffnung zum Be- und Entladen des Kofferraums 7 hochschwenkbar ist.

Die Kofferraumklappe 5, die auch den z. B. einen Teil des Kofferraums 7 einnehmenden Verdeckkasten 3 abdeckt, ist mittels einer hinteren Lagereinrichtung um eine hintere Schwenkachse 9 schwenkbar gelagert und wird mit ihrem Vorderrand 10 zum Freigeben einer Durchtrittsöffnung für das Dach 2 um diese Schwenkachse 9 hochgeschwenkt, so daß das Dach 2 in den Verdeckkasten 3 abgelegt bzw. aus ihm ausgefahren werden kann. Beim Ablegen des beispielsweise dreiteiligen Hardtop-Daches 2 schwenkt z. B. das vordere Dachteil 11 (Fig. 3) auf das mittlere Dachteil 12 und das hintere Dachteil 4 über diese beiden Dachteile 11 und 12, bevor alle Dachteile in den Verdeckkasten 3 abgesenkt werden. Eine diese Ablagebewegung ermöglichende Ablagemechanik ist in der oben genannten DE 101 50 218 A1 beschrieben.

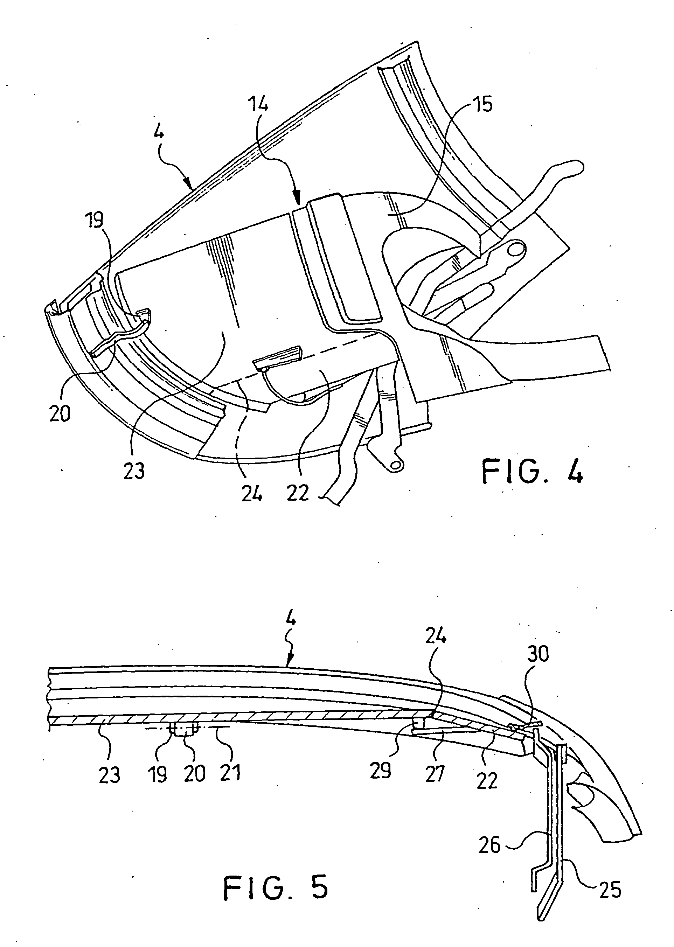

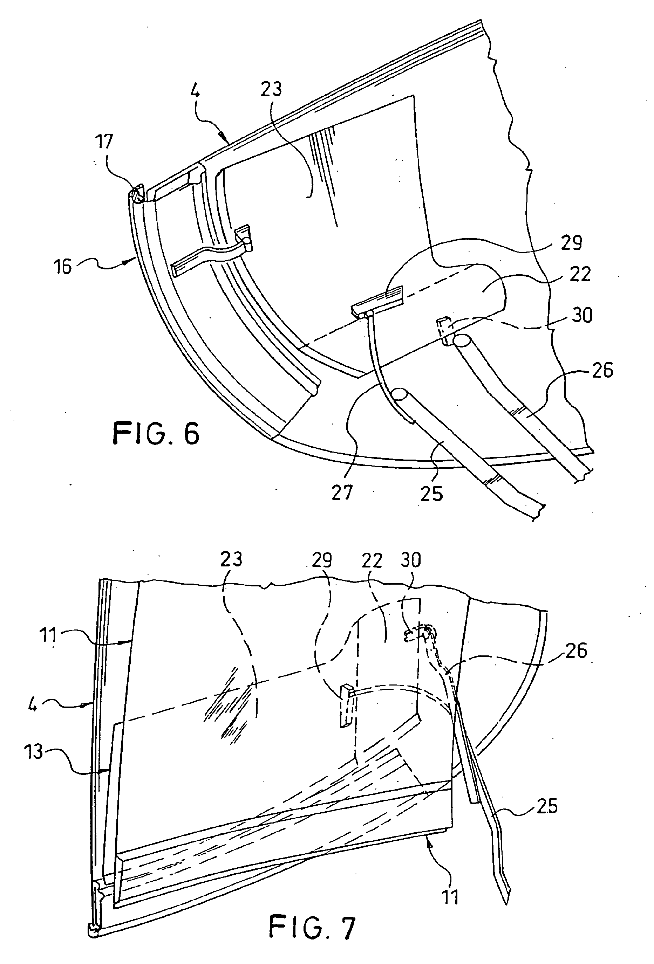

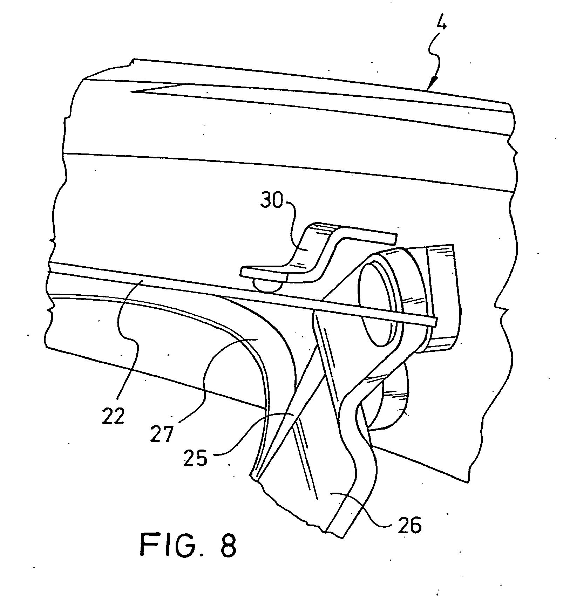

Im Schließzustand des Daches 2 erstreckt sich eine Hutablage 13 vom Ober- oder Hinterrand 14 einer den Kofferraum 7 bzw. den Verdeckkasten 3 gegenüber dem Fahrzeuginnenraum begrenzenden Trennstruktur 15, die ein eigenes Bauteil oder auch die Rückseite der Fahrzeugsitze sein kann, nach hinten bis an den Unterrand 16 bzw. ein unteres Rahmenteil des hinteren Dachteils 4, der eine im Schließzustand des Daches 2 gegen die Unterseite der Kofferraumklappe 5 gedrückte Dichtung 17 aufweist. Die Hutablage 13 enthält im Bereich ihres Hinterrandes 18 unterseitig eine Lagereinrichtung, die z. B. zwei in Querrichtung voneinander beabstandete und beidseits einer vertikalen Fahrzeuglängsmittelebene angeordnete Lagerböcke 19 enthält. Jeder Lagerbock 19 ist an einem jeweils zugeordneten Trägerteil 20, das am unteren Rahmenteil 16 des hinteren Dachteils 4 befestigt ist, zum Verschwenken um eine Querschwenkachse 21 bewegbar gelagert. Des weiteren enthält die Hutablage 13 an ihren seitlichen Außenrändern jeweils einen äußeren Seitenbereich 22 (siehe Fig. 4 bis 7, in denen jeweils nur die eine Hälfte des Daches mit den zugehörigen Teilen dargestellt ist), der gegenüber dem Mittelteil 23 der Hutablage 13 schwenkbeweglich ist. Jeder klappenartige Seitenbereich 22 ist um eine in etwa in Längsrichtung verlaufende Schwenk- oder Biegelinie 24, die z. B. von einer Materialschwächung, einem Scharnier oder einem Gelenk gebildet ist, beweglich.

Das hintere Dachteil 4 ist mittels zweier Lenker 25 und 26 eines Viergelenks an der Dachablagemechanik schwenkbar gelagert, beispielsweise an einem Hauptviergelenk, das das mittlere Dachteil 12 an der Karosserie bewegbar lagert (entsprechend der in der älteren deutschen Patentanmeldung 101 50 218.4 beschriebenen Ausführungsform).

An dem hinteren Lenker 25 des Viergelenks ist ein gekrümmter Steuerhebel 27 angebracht, der sich vom Lenker 25 einwärts erstreckt und dessen freies Ende 28 an der Unterseite eines Gleitbockes 29 anliegt, der an der Unterseite des Mittelteils 23 der Hutablage 13 in Längsrichtung und einwärts neben der längs verlaufenden Schwenklinie 24 für den äußeren Seitenbereich 22 angeordnet ist.

Bei geschlossenem Dach 2 (Fig. 1) ist die Hutablage 13 beispielsweise durch eine Federeinrichtung (nicht dargestellt) in ihre Ruhelage nach unten gegen den jeweiligen seitlichen Steuerhebel 27 vorgespannt. Die Hutablage 13 ist somit in etwa waagrecht angeordnet und grenzt mit ihrem Vorderrand an den Hinterrand 14 der Trennstruktur 15 des Cabriolets hinter den Fahrzeugsitzen an.

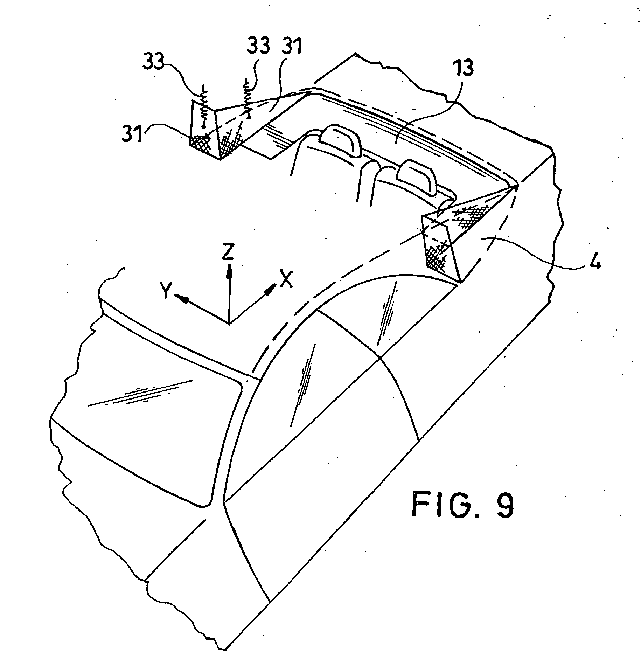

Am seitlichen Außenrand des jeweiligen Seitenbereichs 22 der Hutablage 13 ist eine Innenverkleidung 31 befestigt (siehe z.B. Fig. 1 und 9), die eine Abdeckung für den zugeordneten Seitenabschnitt des hinteren Dachteils 4, der auch als C-Säulenabschnitt bezeichnet werden kann, oder bei einem hiervon abweichenden Ausführungsbeispiel eines Daches für eine eigenständige C-Säule bildet. Die Innenverkleidung 31, die z. B. ein Stoffteil oder ein Stoffvorhang oder allgemein ein Gewebe oder eine Folie ist, ist an ihrem Oberende 32 mit dem hinteren Dachteil 4 bzw. der C-Säule verbunden. In der in Fig. 1 dargestellten Stellung bei geschlossenem Dach 2 ist die Innenverkleidung 31 zwischen der Hutablage 13 und dem hinteren Dachteil 4 gespannt angeordnet, wobei die Spannung durch die aus einem elastischen Material gebildete Innenverkleidung 31 erreicht wird. In alternativer Gestaltung ist eine Spanneinrichtung 33 (siehe Fig. 9) vorgesehen, die z. B. flexible Spannelemente wie Bänder oder Federn aufweist, die Innenverkleidung 31 mit dem hinteren Dachteil 4 bzw. der C-Säule verbindet und sie in der Schließstellung des Daches (Fig. 1) zwischen der Hutablage 13 und dem hinteren Dachteil 4 gespannt hält (das hinterer Dachteil 4 als Befestigung der Spanneinrichtung ist in Fig. 9 nicht dargestellt). Die Spanneinrichtung kann zusätzlich zu der elastischen Innenverkleidung 31 oder auch mit einer nicht elastischen Innenverkleidung verwendet werden, so daß in diesem Fall das Spannen der Innenverkleidung 31 ausschließlich durch die Spanneinrichtung 33 erfolgt.

Zum Verschließen eines hinteren Spaltes 34 oder auch zum Abdecken eines im wesentlichen spaltfreien Eckbereichs zwischen der Hutablage 13 und dem hinteren Dachteil 4 ist eine Abdeckeinrichtung vorgesehen, z. B. ein Stoff 35, eine Folie oder ein sonstiges flexibles, elastisches, biege- oder faltbares Abdeckteil. Der Stoff 35 ist einerseits am hinteren Dachteil 4 und andererseits an der Hutablage 13 befestigt. In alternativer Gestaltung bildet eine Dichtlippe 36 oder Gummilippe (siehe Fig. 1a) die Abdeckung des hinteren Spaltes 34. Die Dichtlippe 36 ist entweder am hinteren Dachteil 4 oder an der Hutablage 13 befestigt und liegt am jeweils gegenüberliegenden Teil elastisch gespannt dicht an.

Die Hutablage 13 enthält ein Entlüftungsgitter 37 (siehe Fig. 1), das in eine z. B. längliche schlitzförmige Öffnung am Hinterrand der Hutablage 13 eingesetzt ist. Durch das Entlüftungsgitter 37 kann eine Luftströmung zum Be- oder Entlüften des Raumes oberhalb bzw. unterhalb der Hutablage 13 strömen, wenn durch die Abdeckeinrichtung die Hutablage 13 randseitig abgedichtet ist.

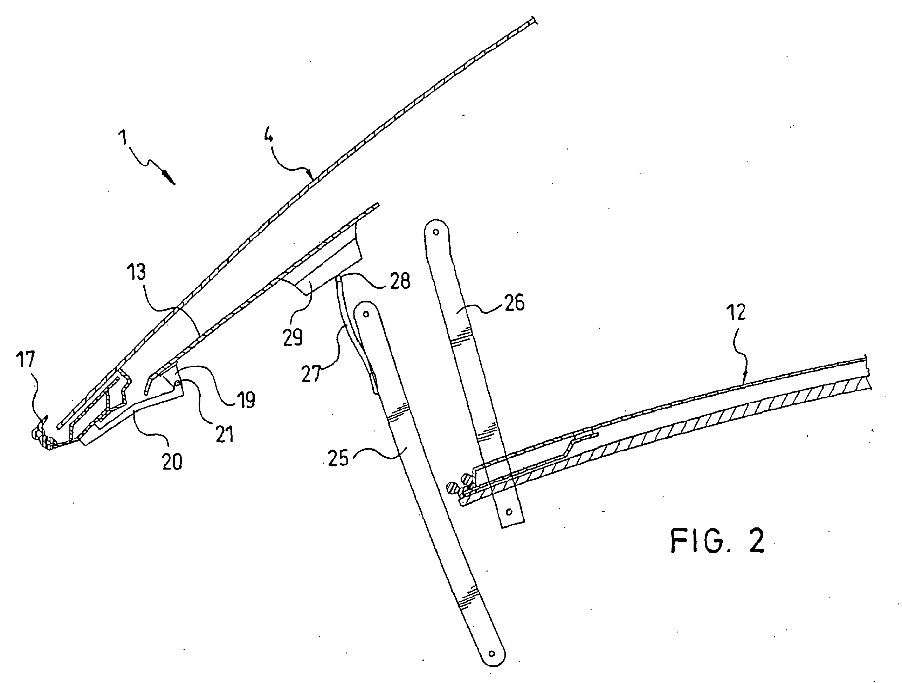

Zum Öffnen und Ablegen des Daches 2 wird zunächst mittels einer Antriebseinrichtung (nicht dargestellt) die Kofferraumklappe 5 durch Verschwenken um ihre hintere Schwenkachse 9 an ihrem Vorderrand 10 angehoben. Anschließend wird das hintere Dachteil 4 mittels der beiden Lenker 25, 26 nach oben geschwenkt (Fig. 2 zeigt eine Zwischenstellung), wobei der Steuerhebel 27 in Gleiteingriff am Gleitbock 29 den Mittelteil 23 der Hutablage 13 um die Schwenkachse 21 nach oben gegen die Innenseite des hinteren Dachteils 4 schwenkt. Im Verlauf des Verschwenkens der Hutablage 13 legt sich der Seitenbereich 22 der Hutablage 13 gegen einen Niederhalter 30, der an der Innenseite des hinteren Dachteils 4 in dessen Seitenrandbereich fest angebracht ist. Der Niederhalter 30 liegt somit auf der Oberseite des Seitenbereichs 22 der Hutablage 13 auf und hindert den Seitenbereich 22 daran, sich gemeinsam mit dem Mittelteil 23 weiterhin um die Schwenkachse 21 zu verschwenken, so daß sich der Seitenbereich 22 gegenüber dem Mittelteil 23 der Hutablage 13 um die Schwenklinie 24 zunehmend verschwenkt.

Beim Annähern oder Schwenken der Hutablage 13 gegen das hintere Dachteil 4 wird die Innenverkleidung 31 (in Fig. 2 nicht dargestellt) entspannt und sie nimmt unter Faltenbildung eine platzsparende Stellung ein. Die hintere Abdeckeinrichtung bzw. der Stoff 35 oder die Dichtlippe 36 folgt der Bewegung der Hutablage 13 und behält ständig die absperrende oder abdichtende Funktion bei.

In der abgelegten Endstellung (Fig. 3) des Daches 2 ist der Mittelteil 23 der Hutablage 13 deutlich gegen die Innenseite des hinteren Dachteils 4 geschwenkt, während jeder Seitenbereich 22 der Krümmung des hinteren Dachteils 4 in seinem Randbereich folgend verschwenkt ist, je nach Gestaltung des hinteren Dachteils 4 um beispielsweise 10 bis 30 Grad um die Schwenklinie 24. Das in Querrichtung gekrümmte vordere Dachteil 11 kann somit in der Ablagestellung (Fig. 3) näher an der Unterseite der Hutablage 13 bzw. der Innenseite des hinteren Dachteils 4 angeordnet werden, so daß durch die anpaßbare Hutablage 13 in vertikaler Richtung für das Dach 2 weniger Ablageraum im Verdeckkasten 3 bzw. im Kofferraum 5 benötigt wird. Die seitliche Innenverkleidung 31 ist entspannt und kann sich raumsparend in Falten legen.

Da die Antriebs- und Schwenkbewegung der Hutablage 13 von der Bewegung der beiden Lenker 25 und 26 mittels des Steuerhebels 27 abgeleitet wird, ist ein eigener Antrieb für die Verstellung der Hutablage 13 nicht erforderlich.

Beim Schließen des Daches 2 erfolgt der Bewegungsablauf in entgegengesetzter Richtung.

Der Steuerhebel 27 kann an seinem Eingriffsende 28 einen Rollelement oder dergleichen aufweisen, so daß statt des Gleiteingriffs der Steuerhebel 27 auf dem Bock 29 oder einer andersartigen Fläche an der Hutablage 13 abrollt.

Die seitliche Innenverkleidung 31 kann in alternativer Gestaltung anstatt von dem flexiblen Stoffteil oder Stoffvorhang von einem festen Verkleidungsteil gebildet sein, das an der Hutablage 13 mittels einer Schwenklagerung, z. B. einem Scharnier oder Gelenk, schwenkbar gelagert ist oder an der Hutablage 13 fest angebracht ist und um eine Biegelinie elastisch verschwenkbar ist. Eine Spanneinrichtung kann vorgesehen sein, um das Verkleidungsteil gegen das hintere Dachteil 4 vergleichbar dem Stoff 35 zu spannen. Die seitliche Innenverkleidung 31 kann sich auch um einen vorderen Abschnitt des hinteren Dachteils 4 bzw. der C-Säule erstrecken (siehe Fig. 9, Innenverkleidung 31').

Die Abdeckeinrichtung bzw. die Innenverkleidung verhindert das Eindringen von Fremdgegenständen in den Bereich der Verdeckmechanik und unterstützt durch die Abdichtung der Hutablage gegenüber dem hinteren Dachteil 4 die Geräuschdämmung des Fahrzeuginnenraums gegenüber dem angrenzenden Dachablageraum oder Kofferraum.

### Bezugszeichenliste

- 1: Cabriolet
- 2: Dach
- 3: Verdeckkasten
- 4: hinteres Dachteil
- 5: Kofferraumklappe
- 7: Kofferraum
- 9: Schwenkachse
- 10: Vorderrand
- 11: vorderes Dachteil
- 12: mittleres Dachteil
- 13: Hutablage
- 14: Hinterrand
- 15: Trennstruktur
- 16: Unterrand
- 17: Dichtung
- 18: Hinterrand
- 19: Lagerbock
- 20: Trägerteil
- 21: Querschwenkachse
- 22: Seitenbereich
- 23: Mittelteil
- 24: Schwenklinie
- 25: Lenker
- 26: Lenker
- 27: Steuerhebel
- 28: freies Ende
- 29: Gleitbock
- 30: Niederhalter
- 31: Innenverkleidung
- 32: Oberende
- 33: Spanneinrichtung
- 34: Spalt
- 35: Stoff
- 36: Dichtlippe
- 37: Entlüftungsgitter

## Patentansprüche

1. Hutablage eines Cabriolets mit einem umwandelbaren Dach, das in einen rückwärtigen Ablageraum des Cabriolets absenkbar ist,
**dadurch gekennzeichnet,**
**daß** die Hutablage (13) in Zuordnung zu einem hinteren Dachteil (4) des absenkbaren Daches (2) bewegbar gelagert ist und mittels einer Hutablage-Verstelleinrichtung (25, 27, 29) zwischen einer Funktionsstellung bei geschlossenem Dach (2) und einer Ablagestellung, in der sie relativ zum hinteren Dachteil (4) des in den Ablageraum (3) abgesenkten Daches (2) verlagert ist, verstellbar ist, und
**daß** eine Abdeckeinrichtung (31, 35, 36) für den Übergang zwischen der Hutablage (13) und dem hinteren Dachteil (4) vorgesehen ist.

2. Hutablage nach Anspruch 1,
**dadurch gekennzeichnet, daß** zumindest ein Teil der Abdeckeinrichtung von einer Innenverkleidung (31) gebildet ist, die mit der Hutablage (13) verbunden ist und bei geschlossenem Dach am hinteren Dachteil (4) innenseitig angeordnet ist.

3. Hutablage nach Anspruch 2,
**dadurch gekennzeichnet, daß** die Innenverkleidung (31) ein Stoffteil oder ein an der Hutablage (13) schwenkbar angebrachtes festes Verkleidungsteil ist.

4. Hutablage nach einem der Ansprüche 1 bis 3,
**dadurch gekennzeichnet, daß** die Abdeckeinrichtung einem einer C-Säule entsprechenden Seitenteil des hinteren Dachteils (4) und/oder einem rückwärtigen Teil des hinteren Dachteils (4) zugeordnet ist.

5. Hutablage nach einem der Ansprüche 1 bis 4,
**dadurch gekennzeichnet, daß** die Innenverkleidung (31) mit dem hinteren Dachteil (4) verbunden ist.

6. Hutablage nach Anspruch 5,
**dadurch gekennzeichnet, daß** die Innenverkleidung (31) mit dem hinteren Dachteil (4) mittels einer Spanneinrichtung (33) verbunden ist.

7. Hutablage nach einem der Ansprüche 1 bis 6,
**dadurch gekennzeichnet, daß** eine Dichtung, insbesondere eine Dichtlippe (36), zwischen der Hutablage (13) und dem hinteren Dachteil (4) abdichtend angeordnet ist.

8. Hutablage nach Anspruch 7,
**dadurch gekennzeichnet, daß** die Dichtung (36) an der Hutablage (13) und/oder an dem hinteren Dachteil (4) angebracht ist.

9. Hutablage nach einem der Ansprüche 1 bis 8,
**dadurch gekennzeichnet, daß** die Hutablage (13) in der Ablagestellung gegen die Innenseite des hinteren Dachteils (4) des in den Ablageraum (3) abgesenkten Daches (2) verlagert ist.

10. Hutablage nach einem der Ansprüche 1 bis 9,
**dadurch gekennzeichnet, daß** die Hutablage (13) um eine im Bereich ihres Hinterrandes (18) angeordnete Schwenkachse (21) schwenkbar ist.

11. Hutablage nach einem der Ansprüche 1 bis 10,
**dadurch gekennzeichnet, daß** die Hutablage (13) im Bereich ihres Hinterrandes (18) mit dem hinteren Dachteil (4) schwenkbar verbunden ist.

12. Hutablage nach einem der Ansprüche 1 bis 11,
**dadurch gekennzeichnet, daß** die Hutablage (13) beim Ablegen des Daches (2) in das hintere Dachteil (4) einschwenkt.

13. Hutablage nach einem der Ansprüche 1 bis 12,
**dadurch gekennzeichnet, daß** die Hutablage (13) zwei sich gegenüberliegende äußere Seitenbereiche (22) aufweist, die gegenüber dem Mittelteil (23) der Hutablage (13) verschwenkbar sind.

14. Hutablage nach einem der Ansprüche 1 bis 13,
**dadurch gekennzeichnet, daß** die Hutablage (13) in Schließstellung des Daches (2) in ihre Funktionsstellung nach unten vorgespannt ist.

15. Hutablage nach einem der Ansprüche 1 bis 14,
**dadurch gekennzeichnet, daß** ein Steuerhebel (27) vorgesehen ist, der mit der Unterseite der Hutablage (13) in Kontakt ist und diese beim Ablegen des Daches (2) gegen das hintere Dachteil (4) verlagert bzw. schwenkt.

16. Hutablage nach Anspruch 15,
**dadurch gekennzeichnet, daß** der Steuerhebel (27) an der Lagermechanik (25, 26) des Daches (2) bzw. des hinteren Dachteils (4) angebracht ist.

17. Hutablage nach Anspruch 15 oder 16,
**dadurch gekennzeichnet, daß** an der Unterseite der Hutablage (13) eine längliche Eingriffsfläche (29) gebildet ist, an der der Steuerhebel (27) in Steuereingriff ist.

18. Hutablage nach einem der Ansprüche 13 bis 17,
**dadurch gekennzeichnet, daß** am hinteren Dachteil (4) seitlich ein Niederhalter (30) angeordnet ist, der in der Ablagestellung des Daches (2) den Seitenbereich (22) der verschwenkten Hutablage (13) gegenüber dem Mittelteil (23) der Hutablage (13) verschwenkt hält.

19. Hutablage nach einem der Ansprüche 1 bis 18,
**dadurch gekennzeichnet, daß** das hintere Dachteil (4) in Ablagestellung mit seiner Außenseite nach oben weist und ein zweites Dachteil (11) gleichbombiert zu dem hinteren Dachteil (4) unterhalb der Hutablage (13) angeordnet ist.

20. Hutablage nach einem der Ansprüche 1 bis 19,
**dadurch gekennzeichnet, daß** das Dach ein Festelementedach mit zumindest einem ersten hinteren Dachteil und einem zweiten vorderen Dachteil ist.

21. Cabriolet mit einem in einen rückwärtigen Ablageraum absenkbaren Dach und einer Hutablage nach einem der Ansprüche 1 bis 20.

## Claims

1. Rear shelf for a convertible having a convertible roof which can be lowered into a rear storage compartment of the cabriolet,
**characterized**
**in that** the rear shelf (13) is mounted such that it can be moved in association with a rear roof part (4) of the lowerable roof (2) and, by means of a rear shelf adjusting device (25, 27, 29), can be adjusted between a functional position with the roof (2) closed and a stowed position, in which it is displaced relative to the rear roof part (4) of the roof (2) lowered into the storage compartment (3), and
**in that** a covering device (31, 35, 36) is provided for the transition between the rear shelf (13) and the rear roof part (4).

2. Rear shelf according to Claim 1, **characterized in that** at least part of the covering device is formed by an inner trim (31), which is connected to the rear shelf (13) and, when the roof is closed, is arranged on the inside of the rear roof part (4).

3. Rear shelf according to Claim 2, **characterized in that** the inner trim (31) is a fabric part or a fixed trim part fitted to the rear shelf (13) such that it can be pivoted.

4. Rear shelf according to one of Claims 1 to 3, **characterized in that** the covering device is assigned to a side part of the rear roof part (4) corresponding to a C pillar and/or to a rear part of the rear roof part (4).

5. Rear shelf according to one of Claims 1 to 4, **characterized in that** the inner trim (31) is connected to the rear roof part (4).

6. Rear shelf according to Claim 5, **characterized in that** the inner trim (31) is connected to the rear roof part (4) by means of a tensioning device (33).

7. Rear shelf according to one of Claims 1 to 6, **characterized in that** a seal, in particular a sealing lip (36), is arranged in a sealing manner between the rear shelf (13) and the rear roof part (4).

8. Rear shelf according to Claim 7, **characterized in that** the seal (36) is fitted to the rear shelf (13) and/or to the rear roof part (4).

9. Rear shelf according to one of Claims 1 to 8, **characterized in that**, when it is in the stowed position, the rear shelf (13) is displaced against the inside of the rear roof part (4) of the roof (2) lowered into the storage compartment (3).

10. Rear shelf according to one of Claims 1 to 9, **characterized in that** the rear shelf (13) can be pivoted about a pivot axis (21) arranged in the region of its rear edge (18).

11. Rear shelf according to one of Claims 1 to 10, **characterized in that**, in the region of its rear edge (18), the rear shelf (13) is pivotably connected to the rear roof part (4).

12. Rear shelf according to one of Claims 1 to 11, **characterized in that** the rear shelf (13) pivots into the rear roof part (4) as the roof (2) is stowed.

13. Rear shelf according to one of Claims 1 to 12, **characterized in that** the rear shelf (13) has two mutually opposite outer side regions (22) which can be pivoted with respect to the central part (23) of the rear shelf (13).

14. Rear shelf according to one of Claims 1 to 13, **characterized in that**, in the closed position of the roof (2), the rear shelf (13) is prestressed downwards into its functional position.

15. Rear shelf according to one of Claims 1 to 14, **characterized in that** a control lever (27) is provided, which is in contact with the underside of the rear shelf (13) and displaces or pivots the latter towards the rear roof part (4) as the roof (2) is stowed.

16. Rear shelf according to Claim 15, **characterized in that** the control lever (27) is fitted to the supporting mechanism (25, 26) of the roof (2) or the rear roof part (4).

17. Rear shelf according to Claim 15 or 16, **characterized in that** on the underside of the rear shelf (13) there is formed an elongated engagement surface (29), with which the control lever (27) is in control engagement.

18. Rear shelf according to one of Claims 13 to 17, **characterized in that** on the rear roof part (4), at the sides, there is arranged a hold-down (30) which, in the stowed position of the roof (2) keeps the side region (22) of the pivoted rear shelf (13) pivoted with respect to the central part (23) of the rear shelf (13).

19. Rear shelf according to one of Claims 1 to 18, **characterized in that**, when in the stowed position, the rear roof part (4) points upwards with its outer side and a second roof part (11) is arranged underneath the rear shelf (13) with the same camber as the rear roof part (4).

20. Rear shelf according to one of Claims 1 to 19, **characterized in that** the roof is a fixed element roof having at least a first, rear roof part and a second, front roof part.

21. Convertible having a roof that can be lowered into a rear storage compartment and a rear shelf according to one of Claims 1 to 20.

## Revendications

1. Plage arrière d'un cabriolet équipé d'un toit convertible pouvant être abaissé dans un compartiment postérieur de remisage dudit cabriolet,
**caractérisée**
**par le fait que** ladite plage arrière (13) est montée mobile en association avec une partie postérieure (4) du toit abaissable (2) et peut être réglée, au moyen d'un dispositif de réglage (25, 27, 29), entre une position fonctionnelle dans laquelle le toit (2) est fermé, et une position escamotée dans laquelle elle peut être déplacée vis-à-vis de la partie postérieure (4) dudit toit (2) encaissé dans le compartiment de remisage (3) ; et
par la présence d'un dispositif de recouvrement (31, 35, 36) affecté à la transition entre ladite plage arrière (13) et ladite partie postérieure (4) du toit.

2. Plage arrière selon la revendication 1,
**caractérisée par le fait qu'**au moins une partie du dispositif de recouvrement est matérialisée par un habillage intérieur (31) relié à ladite plage arrière (13) et disposé, à l'état fermé du toit, à la face intérieure de la partie postérieure (4) dudit toit.

3. Plage arrière selon la revendication 2,
**caractérisée par le fait que** l'habillage intérieur (31) est une pièce de tissu ou une pièce fixe d'habillage montée, à pivotement, sur ladite plage arrière (13).

4. Plage arrière selon l'une des revendications 1 à 3,
**caractérisée par le fait que** le dispositif de recouvrement est assigné à une région latérale de la partie postérieure (4) du toit qui correspond à une colonne C, et/ou à une région arrière de ladite partie postérieure (4).

5. Plage arrière selon l'une des revendications 1 à 4,
**caractérisée par le fait que** l'habillage intérieur (31) est relié à la partie postérieure (4) du toit.

6. Plage arrière selon la revendication 5,
**caractérisée par le fait que** l'habillage intérieur (31) est relié à la partie postérieure (4) du toit au moyen d'un dispositif de tension (33).

7. Plage arrière selon l'une des revendications 1 à 6,
**caractérisée par le fait qu'**une garniture d'étanchement, en particulier une lèvre d'étanchement (36), est interposée entre ladite plage arrière (13) et la partie postérieure (4) du toit, en assurant l'étanchéité.

8. Plage arrière selon la revendication 7,
**caractérisée par le fait que** la garniture d'étanchement (36) est implantée sur ladite plage arrière (13) et/ou sur la partie postérieure (4) du toit.

9. Plage arrière selon l'une des revendications 1 à 8,
**caractérisée par le fait que** ladite plage arrière (13) est décalée, dans la position escamotée, contre la face intérieure de la partie postérieure (4) du toit (2) encaissé dans le compartiment de remisage (3).

10. Plage arrière selon l'une des revendications 1 à 9,
**caractérisée par le fait que** ladite plage arrière (13) peut pivoter autour d'un axe de pivotement (21) situé dans la région de son bord postérieur (18).

11. Plage arrière selon l'une des revendications 1 à 10,
**caractérisée par le fait que** ladite plage arrière (13) est reliée de manière pivotante, dans la région de son bord postérieur (18), à la partie postérieure (4) du toit.

12. Plage arrière selon l'une des revendications 1 à 11,
**caractérisée par le fait que** ladite plage arrière (13) est rentrée par pivotement dans la partie postérieure (4) du toit lors du remisage dudit toit (2).

13. Plage arrière selon l'une des revendications 1 à 12,
**caractérisée par le fait que** ladite plage arrière (13) comprend deux régions latérales extérieures (22) qui se font mutuellement face et peuvent pivoter vis-à-vis de la partie centrale (23) de ladite plage arrière (13).

14. Plage arrière selon l'une des revendications 1 à 13,
**caractérisée par le fait que** ladite plage arrière (13) est précontrainte vers le bas, en direction de sa position fonctionnelle, dans la position fermée du toit (2).

15. Plage arrière selon l'une des revendications 1 à 14,
**caractérisée par** la présence d'un levier de commande (27) qui est en contact avec la face inférieure de ladite plage arrière (13) et qui, lors du remisage du toit (2), provoque respectivement un décalage ou un pivotement de ladite plage arrière vers 1a partie postérieure (4) dudit toit.

16. Plage arrière selon la revendication 15,
**caractérisée par le fait que** le levier de commande (27) est installé sur le mécanisme respectif (25, 26) de montage du toit (2) ou de la partie postérieure (4) dudit toit.

17. Plage arrière selon la revendication 15 ou 16,
**caractérisée par le fait qu'**une surface allongée (29) de venue en prise, avec laquelle le levier de commande (27) est en prise de commande, est ménagée à la face inférieure de ladite plage arrière (13).

18. Plage arrière selon l'une des revendications 13 à 17,
**caractérisée par le fait qu'**une pièce (30) de blocage à demeure, occupant une position latérale sur la partie postérieure (4) du toit, maintient la région latérale (22) de ladite plage arrière (13) à l'état pivoté, vis-à-vis de la partie centrale (23) de ladite plage arrière (13), dans la position escamotée du toit (2).

19. Plage arrière selon l'une des revendications 1 à 18,
**caractérisée par le fait que** la partie postérieure (4) du toit est orientée vers le haut par sa face extérieure, en position escamotée, et une seconde partie (11) dudit toit, présentant le même bombement que ladite partie postérieure, est disposée au-dessous de ladite plage arrière (13).

20. Plage arrière selon l'une des revendications 1 à 19,
**caractérisée par le fait que** le toit est un toit à éléments fixes, comprenant au moins une première partie postérieure et une seconde partie antérieure.

21. Cabriolet équipé d'un toit abaissable dans un compartiment postérieur de remisage, et d'une plage arrière conforme à l'une des revendications 1 à 20.
